# EUROPÄISCHE PATENTSCHRIFT

(11) **EP 2 678 214 B1**
(45) Veröffentlichungstag und Bekanntmachung des Hinweises auf die Patenterteilung: **08.04.2015**
(21) Anmeldenummer: 12708266.7
(22) Anmeldetag: 15.02.2012
(51) Int. Cl.: B62J 9/00

(54) **FAHRRADTASCHE ZUR BEFESTIGUNG IM FAHRRADRAHMEN**
BICYCLE BAG MOUNTED WITHIN THE BICYCLE FRAME
SAC DE BICYCLETTE POUR MONTAGE DANS LE CADRE

(30) Priorität: 22.02.2011 DE 202011003063 U; 22.02.2011 DE 202011003064 U
(43) Veröffentlichungstag der Anmeldung: 01.01.2014
(73) Patentinhaber: Hefter, Christian, 83209 Prien (DE)
(72) Erfinder: Hefter, Christian, 83209 Prien (DE)
(74) Vertreter: Einsiedler, Johannes
(86) Internationale Anmeldenummer: PCT/EP2012/052635
(87) Internationale Veröffentlichungsnummer: WO 2012/113694

(56) Entgegenhaltungen:
- DE-C1- 19 723 886
- DE-U1- 8 709 718
- DE-U1- 9 011 905
- DE-U1- 9 113 204
- DE-U1-202006 013 433
- FR-A- 875 119
- FR-A1- 2 565 192
- FR-A1- 2 685 278
- GB-A- 191 029 065
- US-A- 444 642
- US-A- 522 186
- US-A- 618 612
- US-A- 5 249 721

## Beschreibung

Die Erfindung betrifft eine Fahrradrahmentasche mit einer Außenkontur, die im Wesentlichen der eines durch Oberrohr, Sattelrohr und Unterrohr eines klassischen Diamantfahrradrahmens gebildeten Dreiecks entspricht.

Fahrradtaschen sind üblicherweise am Gepäckträger oder am Lenker eines Fahrrades befestigt. Die auf oder parallel am Gepäckträger angebrachten Taschen haben mit zunehmender Beladung eine im Hinblick auf das Lenkverhalten nachteilige Schwerpunktverlagerung zur Folge. Zudem ist ein sicheres Abstellen mithilfe eines Fahrradständers gegebenenfalls nicht möglich, da das Vorderrad entlastet ist. Ein Herausnehmen von Gegenständen während der Fahrt ist nicht möglich.

Auch eine am Lenker befestigte Fahrradtasche hat mit zunehmender Beladung eine im Hinblick auf das Lenkverhalten nachteilige Schwerpunktverlagerung, in diesem Fall in Richtung Vorderrad, zur Folge.

Vor diesem Hintergrund wurde eine Fahrradrahmentasche entwickelt und in der DE 20 2006 013 433 U1 offenbart, die im Bereich zwischen einem Oberrohr, einem Sattelrohr und mindestens einem Unterrohr eines Fahrradrahmens anordenbar ist und sich nach unten bis zu dem einen Unterrohr erstreckt, mit einer Seitenklappe zum seitlichen Öffnen der Fahrradtasche, mit einem Bodenteil, das auf das mindestens eine Unterrohr aufsetzbar oder an diesem einhängbar ist, einem dem Sattelrohr zugewandten Rückenteil und einer dem Oberrohr zugewandten oberen Wand, die dadurch gekennzeichnet ist, dass das Rückenteil eine mit dem Sattelrohr verrastbare Rasteinrichtung zur seitlichen Führung der Fahrradtasche am Sattelrohr aufweist.

Das mit einer Fahrradrahmentasche ausfüllbare Volumen bzw. der mit einer Fahrradrahmentasche ausfüllbare Bereich zwischen Oberrohr, Sattelrohr und Unterrohr variiert nicht nur bei den einzelnen Fahrradarten (Mountainbike, Trekkingrad, Tourenrad, Reiserad oder Rennrad) sonder naturgemäß auch bei den verschiedenen Rahmenhöhen und/oder Winkelstellungen des Oberrohrs.

Dies hat zur Folge, dass sich oben bezeichnete Fahrradrahmentasche bei einem vorgegebenen Volumen bzw. bei einer vorgegebenen Größe bei der Mehrzahl der Fahrradarten und/oder Rahmenhöhen als entweder zu groß oder aber als zu klein darstellt.

Insbesondere in den Fällen in denen sich die Fahrradrahmentasche als zu klein darstellt, verbleibt gegebenenfalls ein Abstand zwischen dem zum Rahmen gerichteten Außenumfang der Fahrradrahmentasche und einem Rahmenteilstück. In den meisten Fällen fehlen oft nur wenige cm, um die Tasche unter einer leichten Vorspannung einschnappen zu können.

Aus der DE 91 13 204 U1, auf der der Oberbegriff von Anspruch 1 basiert, ist ein Transportbehältnis zur Befestigung im Zentrum eines Fahrradrahmens bekannt, wobei aufgrund der Art der Befestigung eine Bauform und Größe des Behältnisses für verschiedene Fahrradrahmengrößen und -geometrien verwendet werden kann.

Der Erfindung liegt die Aufgabe zugrunde die Nachteile des Standes der Technik zu umgehen, und eine gattungsgemäße Fahrradrahmentasche bereitzustellen, die sich als für unterschiedliche Fahrradarten und/oder Rahmenhöhen passend erweist.

Gelöst wir die Aufgabe durch eine Fahrradrahmentasche mit einer Außenkontur, die im wesentlichen der eines durch Oberrohr, Sattelrohr und Unterrohr eines Diamantfahrradrahmens gebildeten Dreiecks entspricht, zumindest umfassend einen steifen, formstabilen oder mit einem formgebenden Element beaufschlagten Taschenkörper, einen Taschenboden und eine Ausgleichsvorrichtung.

Die erfindungsgemäße Ausgleichsvorrichtung ermöglicht es, eine gattungsgemäße Fahrradrahmentasche an die unterschiedlichen Fahrradarten und/oder an unterschiedliche Rahmenhöhen und/oder an unterschiedliche Winkelstellungen des Oberrohrs anzupassen, indem zumindest in einem Bereich ein Formschluss zwischen dem zum Rahmen gerichteten Außenumfang der Tasche und einem Teilstück des Fahrradrahmens über die Ausgleichsvorrichtung herstellbar ist. Hierdurch wird ein fester Sitz der Tasche im Rahmen gewährleistet.

Erfindungsgemäß wird die Ausgleichsvorrichtung von einer Einrichtung zur Volumenvariation gebildet. Dabei ist der Taschenbodenmehr oder weniger tief in den Taschenkörper einbringbar und anbringbar.

Die erfindungsgemäße Einrichtung zur Volumenvariation ermöglicht es, eine gattungsgemäße Fahrradrahmentasche an die unterschiedlichen Fahrradarten und/oder an unterschiedliche Rahmenhöhen anzupassen. Hierdurch ist nicht nur ein fester Sitz der Tasche im Rahmen gewährleistet, sondern es wird in jedem Fall das im Bereich zwischen Oberrohr, Sattelrohr und Unterrohr zur Verfügung stehende Volumen optimal genutzt.

Dabei wird ein von einem glockenförmigen Taschenkörper lösbarer Taschenboden mit einem hochgezogenen Taschenbodenrand mehr oder weniger tief in den Taschenkörper ein- und schließlichangebracht. Das Anbringen kann beispielsweise durch einen Klett- oder Schnappverschluss bewerkstelligt werden.

Bei einem bevorzugten derartigen Verschluss ist um einen Außenumfang eines hochgezogenen äußeren Taschenbodenrandes ein Hakenband angeordnet, und im unteren Bereich des Taschenkörpers umlaufend an einem Innenumfang ein mehr oder weniger breites Schlaufenband angeordnet. Die nutzbare Breite des Schlaufenbandes und damit die Volumenvariation korreliert dabei unmittelbar mit der Höhe des hochgezogenen äußeren Taschenbodenrandes. Je höher der hochgezogene äußere Taschenbodenrand ausgeführt ist, umso mehr kann das Volumen variiert werden.

Indem das, vorzugsweise auf Stoß, um den hochgezogenen äußeren Taschenbodenrand angebrachte Hakenband nur an seinem oberen Rand mit dem am Innenumfang, vorzugsweise auf Stoß angebrachten Schlaufenband wechselwirkt, ist das maximale Volumen der erfindungsgemäßen Tasche ausgeschöpft.

Wechselwirkt hingegen das Hakenband über die gesamte Breite mit dem Schlaufenband, ist der Taschenboden maximal in den Taschenkörper eingebracht, was zu einem für die spezifische Tasche minimalen Volumen führt. Dazwischen ist jedes Taschenvolumen darstellbar, so dass die erfindungsgemäße Fahrradrahmentasche optimal im Bereich zwischen einem Oberrohr, einem Sattelrohr und mindestens einem Unterrohr eines spezifischen Fahrradrahmens anordenbar ist. Selbstverständlich ist es auch möglich die Positionen von Haken- und Schlaufenband zu vertauschen.

Die Tiefe der Fahrradrahmentasche sollte sich nicht über wesentlich mehr als der Breite des Fahrradrahmens erstrecken, so dass ein bequemes Treten der Pedale mit parallel angeordneten Beinen möglich ist.

Um der Tasche zusätzliche Stabilität zu verleihen und um eine formschlüssige Verbindung zwischen Rahmen und Außenkontur herstellen zu können, weist der Taschenkörper und/oder der Taschenboden über eine Breite b zumindest über einen Bereich des zum Rahmen gerichteten Außenumfangs eine Kavität auf. Als besonders vorteilhaft erweist es sich, wenn die konkave Form an Ober, Sattel- bzw. Unterrohr angepasst ist.

In eine besonders bevorzugten Ausführungsform der erfindungsgemäßen Tasche ist die Tiefe der Kavität und der Bereich der eine Kavität aufweist so gewählt, dass keine zusätzlichen Befestigungsvorrichtungen für die Tasche am Rahmen mehr nötig sind.

Durch ein eine gewisse Elastizität aufweisendes steifes und/oder formstabiles Taschenmaterial, beispielsweise Ethylenvinylacetat, kann die Tasche unter einer leichten Vorspannung in den Rahmen eingeschnappt und über einen Formschluss gehaltert werden.

Alternativ oder zusätzlich kann die Tasche zur Befestigung am Rahmen auch ein oder mehrere Befestigungsmittel aufweisen, beispielsweise Schlaufen mit Klettverschluss, bindbare Bänder oder einfache Schnappverbindungen.

Da sich die erfindungsgemäße Einrichtung zur Volumenvariation in der Höhe des hochgezogenen Taschenbodenrandes erschöpft, ist es, insbesondere für sehr große bzw. sehr kleine Rahmenformen, d.h. für extreme Längenmaße in Bezug auf die Rahmenhöhe und gegebenenfalls auf die Oberrohrlänge und/oder auf die Winkelstellung des Oberrohres vorteilhaft, die untere Schnittkante des Taschenkörpers zu variieren. Dies ermöglicht eine besonders kostengünstige Herstellung einer Vielzahl von Taschengrößen, indem mittels nur eines Werkzeuges eine Einheitsform eines glockenförmigen Taschenkörpers hergestellt und anschließend auf ein vorgegebenes Maß beschnitten wird. Alternativ oder zusätzlich kann auch die Variation der Höhe des hochgezogenen Taschenbodens dazu dienen eine Vielzahl von Taschengrößen darzustellen. Mit nur einem Werkzeug kann auch hierbei ein Taschenboden mit einem hochgezogenen Rand hergestellt werden, der anschließend auf ein vorgegebenes Maß beschnitten wird.

Um die Stabilität der Tasche zu erhöhen ist in einer Weiterbildung der hochgezogene Taschenbodenrand im vorderen Bereich der Fahrradrahmentasche bevorzugt beidseitig drehgelenkig fest oder lösbar mit dem Taschenkörper verbunden. Eine lösbare Verbindung läßt sich beispielsweise durch ein Einclipsen oder ein Einschnappen, z.B. in eine Kugelschnappverbindung herstellen. Eine feste Verbindung erhält man beispielsweise durch Nieten oder Schrauben.

Bei einer Weiterbildung ist die Einrichtung zur Volumenvariation dergestalt ausgeführt, dass die Höhe des hochgezogenen Taschenbodenrandes in Richtung des hinteren Bereichs stetig zunimmt. Bevorzugt läuft bei dieser Weiterbildung ein Haken- bzw. Schlaufenband, das ebenso an Höhe stetig zunimmt um den Taschenbodenrand um. Dadurch lässt sich das Taschenvolumen sowohl an unterschiedliche Rahmenhöhen als auch an Rahmen mit abfallendem Oberrohr optimal anpassen.

Bei, beispielsweise Rahmenzwischengrößen oder ungewöhnlichen Winkelstellungen des Oberrohrs, kann es vorkommen, dass die erfindungsgemäße Einrichtung zur Volumenvariation nicht ausreicht, um einen Formschluss mit dem Rahmen auszubilden. In diesen Fällen verbleibt ein Abstand zwischen dem zum Rahmen gerichteten Außenumfang der erfindungsgemäßen Tasche und einem Rahmenteilstück. In den meisten Fällen fehlen oft nur wenige cm, um die Tasche unter einer leichten Vorspannung einschnappen zu können. In einer besonders bevorzugten Ausführungsform weist daher die erfindungsgemäße Fahrradrahmentasche eine Ausgleichseinrichtung auf, die, zumindest in einem Bereich, einen Formschluss zwischen dem zum Rahmen gerichteten Außenumfang und einem Teilstück des Fahrradrahmens ermöglicht.

Die Ausgleichseinrichtung ist bevorzugt in der Kavität mittels einer lösbaren Befestigungsvorrichtung, beispielsweise durch einen Klettverschluss oder Druckknopf befestigt. Vorteilhafterweise ist der zum Rahmen gerichtete Außenumfang, insbesondere die Kavität, des Taschenkörpers und/oder des Taschenboden durchgängig mit einer Befestigungsvorrichtung, bevorzugt mit einem Teil eines Klettverschlusses, d.h. mit einem Haken- oder Schlaufenband beaufschlagt. Damit kann mittels der Ausgleichseinrichtung die erfindungsgemäße Tasche an jeden Diamantrahmentypus angepasst werden.

Die Form der Ausgleichseinrichtung ist bevorzugt rund, und besonders bevorzugt passt sie sich in Ihrer Form der Kavität der Tasche an da sich die Einrichtung in diesen Ausgestaltungen gut handhaben und stapeln lassen, und einfach in die über einen Bereich des zum Rahmen gerichteten Außenumfangs des Taschenkörper und/oder der Taschenboden umlaufende Kavität einzulegen sind. Das Material ist vorzugsweise dasselbe wie das der Tasche, da damit alle Materialvorteile, insbesondere die Verbindung von Formstabilität mit einer gewissen Elastizität, auf die Ausgleichseinrichtung übertragbar sind. Denkbar sind aber auch alle anderen Materialien, die diese Eigenschaften zumindest annähernd aufweisen.

Um die Ausgleichseinrichtung variabel zu gestalten, weist diese sowohl auf einer Oberseite wie auch auf einer Unterseite zumindest eine Befestigungsvorrichtung auf. Dadurch sind zwei oder mehrere Ausgleichseinrichtungen übereinander stapelbar, so dass auch ein größerer Abstand zwischen dem zum Rahmen gerichteten Außenumfang der erfindungsgemäßen Tasche und einem Rahmenteilstück überbrückt und somit ein Formschluss hergestellt werden kann.

Die Fahrradrahmentasche, insbesondere der Taschenkörper, kann eine oder mehrere, beispielsweise durch einen Reiß-oder Klettverschluss verschließbare Eingriffsöffnungen aufweisen, die es einem Benutzer ermöglichen, auch während der Fahrt schnell und einfach an innerhalb der Tasche befindliche Gegenstände zu gelangen. Ferner kann die Tasche einen oder mehrere Tragegriffe und/oder Gurte aufweisen, die es einem Benutzer ermöglichen eine nicht im Rahmen angebrachte Tasche zu Tragen oder Umzuschnallen.

Weitere Merkmale und Weiterbildungen ergeben sich aus der nachfolgenden Beschreibung zweier Ausführungsbeispiele unter Bezugnahme auf die beiliegenden Zeichnungen.

Es zeigen:
- Fig. 1: eine Seitenansicht einer Fahrradrahmentasche,
- Fig. 2: einen Schnitt (A-A) durch eine Fahrradrahmentasche,
- Fig. 3: eine Ausgleichseinrichtung
- Fig. 4: eine Seitenansicht einer Fahrradrahmentasche mit einer Einrichtung zur Volumenvariation mit minimalem Volumen,
- Fig. 5: eine Seitenansicht einer Fahrradrahmentasche mit einer Einrichtung zur Volumenvariation mit maximalem Volumen,
- Fig. 6: einen Schnitt (A-A) durch eine Fahrradrahmentasche mit einer Einrichtung zur Volumenvariation mit minimalem Volumen und
- Fig. 7: einen Schnitt (A-A) durch eine Fahrradrahmentasche mit einer Einrichtung zur Volumenvariation mit maximalem Volumen.

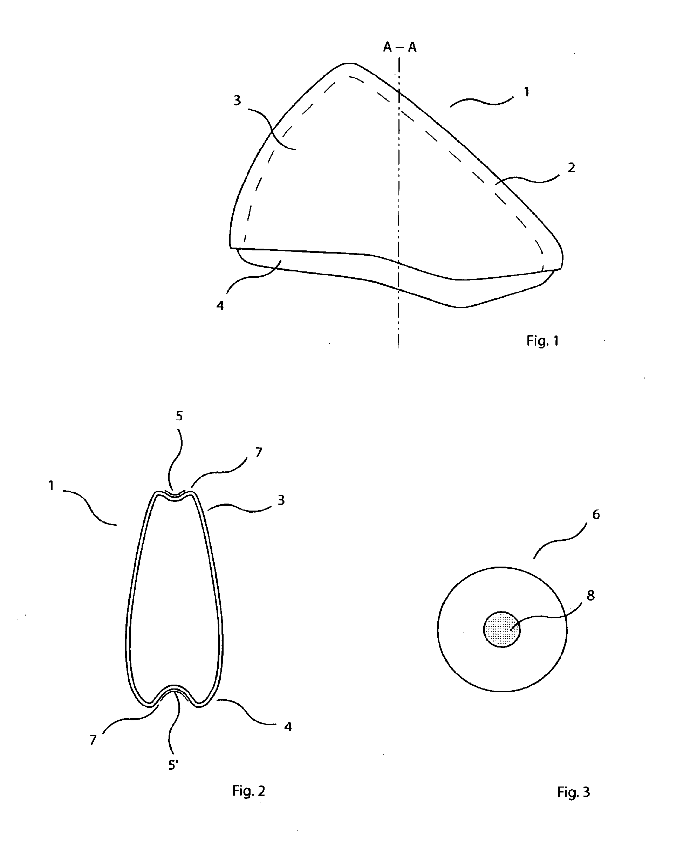

Figur 1 zeigt eine Fahrradrahmentasche (1) mit einer Außenkontur (2), die im Wesentlichen der eines durch Oberrohr, Sattelrohr und Unterrohr eines Diamantfahrradrahmens gebildeten Dreiecks entspricht. Der Taschenkörper (3) und Taschenboden (4) können einstückig oder zweiteilig ausgeführt sein.

Figur 2 zeigt eine Schnittdarstellung (A-A) der aus Figur 1 ersichtlichen Fahrradrahmentasche (1). Um eine formschlüssige Verbindung zwischen Fahrradrahmen und der Außenkontur (2) der Tasche (1) herstellen zu können, weist der Taschenkörper (3) und der Taschenboden (4) eine Kavität (5, 5') auf. Bei, beispielsweise Rahmenzwischengrößen oder ungewöhnlichen Winkelstellungen des Oberrohrs, kann es vorkommen, dass ein Abstand zwischen dem zum Rahmen gerichteten Außenumfang (2) der Tasche und einem Rahmenteilstück verbleibt, so dass kein Formschluss mit dem Rahmen ausgebildet werden kann. Mittels einer oder gegebenenfalls mehreren Ausgleichseinrichtungen, die hinter und/oder übereinander angeordnet werden können, kann nahezu jeder Abstand zwischen dem zum Rahmen gerichteten Außenumfang und Rahmenteilstück überbrückt werden. Zur Befestigung der Ausgleichseinrichtung ist ein Teil eines Klettverschlusses (7) in der Kavität (5, 5') vorgesehen.

Figur 3 zeigt eine Ausgleichseinrichtung in einer runden Ausführungsform (6). Die Einrichtung ist aus einem eine gewisse Elastizität aufweisenden formstabilen Material und hat eine Dicke von etwa 1 cm und einen Durchmesser, der im Wesentlichen der Breite b der Kavität (5, 5') entspricht. Die Ausgleichseinrichtung (6) weist beidseitig eine Befestigungsvorrichtung (8) auf, dergestalt, dass eine Oberseite einer ersten Ausgleichseinrichtung mit einer Unterseite einer zweiten Ausgleichseinrichtung oder mit der in der Kavität (5, 5') angeordneten Befestigungsvorrichtung (7) in Wirkverbindung treten kann. In dem Ausführungsbeispiel wechseln sich Haken- und Schlaufenband eines Klettverschlusses ab.

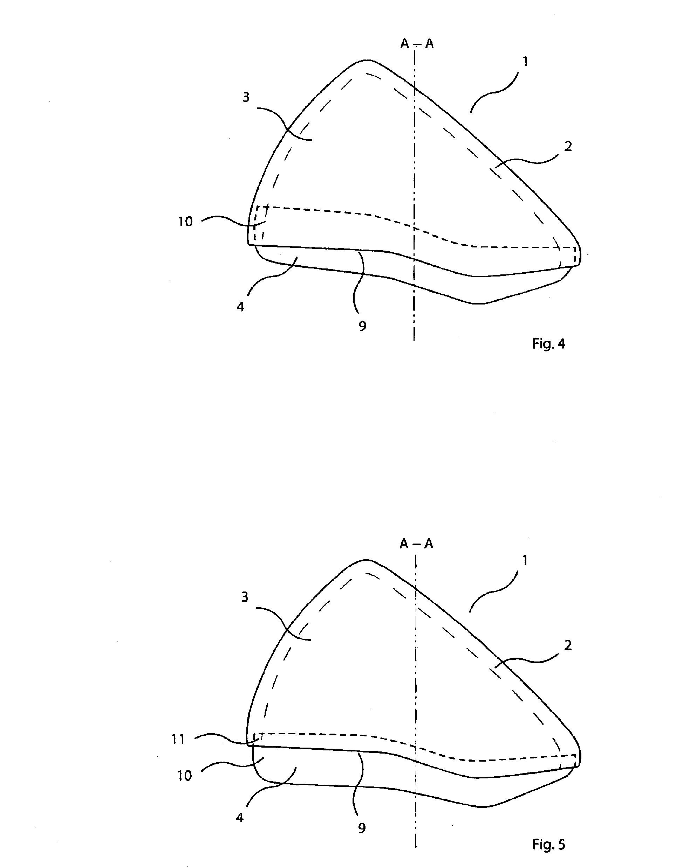

Figur 4 zeigt eine Fahrradrahmentasche (1) mit einer Außenkontur (2), die im Wesentlichen der eines durch Oberrohr, Sattelrohr und Unterrohr eines Diamantfahrradrahmens gebildeten Dreiecks entspricht. Der Taschenkörper (3) weist eine umlaufende Schnittkante (9) auf. Ein lösbarer Taschenboden (4) mit einem hochgezogenen äußeren Rand (10) ist von unten in den glockenförmigen Taschenkörper (3) eingebracht, wobei der hochgezogene Rand (10) mittels eins Klettverschlusses (12) am Innenumfang des Taschenkörpers (3) befestigt ist. Die abgebildete Fahrradrahmentasche (1) hat ein minimales Volumen und ist daher für Fahrräder mit einer kleinen Rahmenhöhe und/oder abfallendem Oberrohr geeignet.

Die in Figur 5 abgebildete Fahrradrahmentasche (1) mit einem Taschenkörper (3) und einem Taschenboden (4) hat ein maximales Volumen und ist daher für Fahrräder mit einer großen Rahmenhöhe geeignet. Die Volumenvariation erfolgt dadurch, dass der hochgezogene äußeren Taschenbodenrand (10) nur an seinem oberen Rand (11) am Innenumfang des glockenförmigen Taschenkörpers (3) befestigt ist.

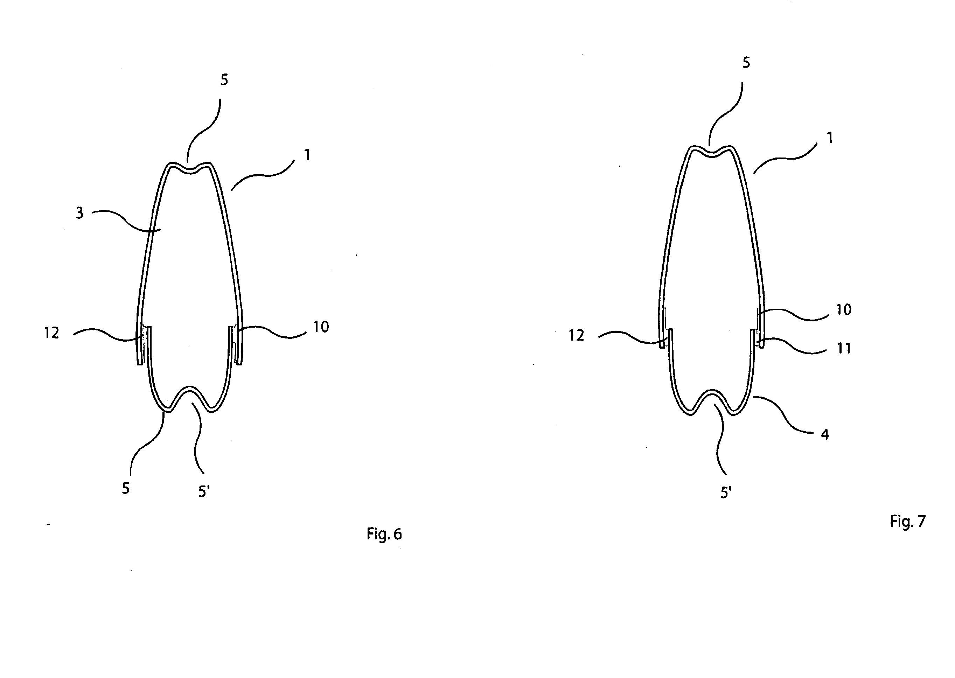

Figur 6 zeigt eine Schnittdarstellung (A-A) der aus Figur 4 ersichtlichen Fahrradrahmentasche (1) mit minimalem Volumen. Der hochgezogene äußeren Taschenbodenrand (10) ist tief in den glockenförmigen Taschenkörper (3) eingebracht und mittels eines Klettverschlusses (12) befestigt. Zur Ausbildung des Verschlusses (12) ist um den Außenumfang des hochgezogenen äußeren Taschenbodenrandes (10) ein Hakenband angeordnet und im unteren Bereich des Taschenkörpers (3) umlaufend an einem Innenumfang ein Schlaufenband angeordnet. Um eine formschlüssige Verbindung zwischen Fahrradrahmen und der Außenkontur (2) der Tasche (1) herstellen zu können, weist der Taschenkörper (3) und der Taschenboden (4) eine Kavität (5, 5') auf.

Figur 7 zeigt eine Schnittdarstellung (A-A) der aus Figur 5 ersichtlichen Fahrradrahmentasche (1) mit maximalem Volumen. Der hochgezogene äußere Taschenbodenrand (10) ist lediglich an seinem oberen Rand (11) am Innenumfang des glockenförmigen Taschenkörpers (3) befestigt ist.

Durch die erfindungsgemäße Einrichtung zur Volumenvariation kann die Tasche in verschiedene Rahmenhöhen und/oder in Diamantrahmen mit abfallendem Oberrohr optimal eingepasst werden, was zu einem verbesserten Fahrverhalten durch den mittigen Schwerpunkt führt. Die Tasche kann leicht aus dem Rahmen herausgenommen und unter einer leichten Vorspannung wieder eingeschnappt werden.

### Bezugszeichenliste

- 1: Fahrradrahmentasche
- 2: Außenkontur
- 3: Taschenkörpers
- 4: Taschenboden
- 5: Kavität
- 6: Ausgleichseinrichtung
- 7: Klettverschlusses
- 8: Befestigungsvorrichtung
- 9: Schnittkante
- 10: Taschenbodenrand
- 11: Rand
- 12: Verschlusses

## Patentansprüche

1. Fahrradrahmentasche (1), mit einer Außenkontur (2), die im Wesentlichen der eines durch Oberrohr, Sattelrohr und Unterrohr eines klassischen Diamantfahrradrahmens gebildeten Dreiecks entspricht, zumindest umfassend einen steifen, formstabilen oder mit einem formgebenden Element beaufschlagten Taschenkörper (3), einen Taschenboden (4) und eine Ausgleichsvorrichtung, **dadurch gekennzeichnet, dass** die Ausgleichsvorrichtung von einer Einrichtung zur Volumenvariation gebildet wird, und dass der von dem glockenförmigen Taschenkörper (3) lösbare Taschenboden (4) mit einem hochgezogenen Taschenbodenrand (10) mehr oder weniger tief in den Taschenkörper (3) einbringbar und anbringbar ist.

2. Fahrradrahmentasche (1) nach Anspruch 1, **dadurch gekennzeichnet, dass** um einen Außenumfang des hochgezogenen äußeren Taschenbodenrandes (10) ein Haken- oder Schlaufenband (12), und im unteren Bereich des Taschenkörpers (3) umlaufend an einem Innenumfang ein mehr oder weniger breites Schlaufen- bzw. Hakenband (12) angeordnet ist.

3. Fahrradrahmentasche (1) nach Anspruch 1 oder 2, **dadurch gekennzeichnet, dass** der Taschenbodenrand (10) im vorderen Bereich der Fahrradrahmentasche, bevorzugt beidseitig, drehgelenkig fest oder lösbar mit dem Taschenkörper verbunden ist.

4. Fahrradrahmentasche (1) nach einem der vorstehenden Ansprüche, **dadurch gekennzeichnet, dass** der Taschenkörper (3) und/oder der Taschenboden (4) über eine Breite b zumindest über einen Bereich des zum Rahmen gerichteten Außenumfangs eine Kavität (5, 5') aufweist.

5. Fahrradrahmentasche (1) nach Anspruch 4, **dadurch gekennzeichnet, dass** die über einen Bereich des zum Rahmen gerichteten Außenumfangs ausgebildete konkave Form an Ober, Sattel- bzw. Unterrohr angepasst ist.

6. Fahrradrahmentasche (1) nach einem der vorstehenden Ansprüche, **dadurch gekennzeichnet, dass** die Tasche zur Befestigung am Rahmen ein oder mehrere Befestigungsmittel aufweist.

7. Fahrradrahmentasche (1) nach einem der vorstehenden Ansprüche, **dadurch gekennzeichnet, dass** der Taschenkörper (3) eine oder mehrere verschließbare Eingriffsöffnungen aufweist.

8. Fahrradrahmentasche (1) nach einem der vorstehenden Ansprüche, **dadurch gekennzeichnet, dass** der zum Rahmen gerichtete Außenumfang eine Befestigungsvorrichtung für eine Ausgleichseinrichtung aufweist.

## Claims

1. A bicycle frame bag (1) having an outer contour (2) substantially corresponding to that of a triangle formed by the upper tube, saddle tube and lower tube of a classic diamond bicycle frame, the bag comprising at least a stiff bag body (3) which is form-stable or which is applied with a form-providing element, a bag base (4) and a balancing device, **characterized in that** the balancing device is formed by a means for volume variation and that the bag base (4) removable from the bell-like bag body (3) with an upwardly extended bag base edge (10) is adapted to be introduced into or mounted at the bag body (3) more or less deeply.

2. The bicycle frame bag (1) according to claim 1, **characterized in that** a hook band or loop band (12) is disposed around an outer circumference of the upwardly extended outer bag base edge (10) and that a more or less wide loop band or hook band (12) is disposed in the lower section of the bag body (3) circularly at an inner circumference.

3. The bicycle frame bag (1) according to claim 1 or 2, **characterized in that** the bag base edge (10) is pivotally fixedly or removably connected to the bag body, preferably on both sides, in the forward section of the bicycle frame bag.

4. The bicycle frame bag (1) according to one of the preceding claims, **characterized in that** the bag body (3) and/or the bag base (4) has a cavity (5, 5') through a width b at least over a range of the outer circumference directed to the frame.

5. The bicycle frame bag (1) according to claim 4, **characterized in that** the concave shape formed over a range of the outer circumference directed to the frame is adapted to the upper tube, saddle tube or lower tube.

6. The bicycle frame bag (1) according to one of the preceding claims, **characterized in that** the bag has one or several fixation means for the fixation at the frame.

7. The bicycle frame bag (1) according to one of the preceding claims, **characterized in that** the bag body (3) has one or several lockable intervening apertures.

8. The bicycle frame bag (1) according to one of the preceding claims, **characterized in that** the outer circumference directed to the frame has a fixation device for a balancing means.

## Revendications

1. Sacoche pour cadre de bicyclette (1), comprenant un contour extérieur (2) qui correspond essentiellement à celui d'un triangle formé par un tube supérieur, un tube de selle et un tube inférieur d'un cadre de bicyclette classique en forme de losange, comprenant au moins un corps de sacoche (3) rigide, de forme stable ou sollicité par un élément conférant une forme, un fond de sacoche (4) et un dispositif d'équilibrage, **caractérisée en ce que** le dispositif d'équilibrage est formé par un système de variation de volume et **en ce que** le fond de sacoche (4) pouvant être détaché du corps de sacoche en forme de cloche (3) peut être introduit et monté plus ou moins profondément dans le corps de sacoche (3) avec un bord de fond de sacoche relevé (10).

2. Sacoche pour cadre de bicyclette (1) selon la revendication 1, **caractérisée en ce qu'**une bande à crochets ou à boucles (12) est disposée autour d'une périphérie extérieure du bord de fond de sacoche extérieur relevé (10) et une bande à boucles ou à crochets (12) plus ou moins large est disposée sur le pourtour dans la région inférieure du corps de sacoche (3) au niveau d'une périphérie intérieure.

3. Sacoche pour cadre de bicyclette (1) selon la revendication 1 ou 2, **caractérisée en ce que** le bord de fond de sacoche (10) est connecté au corps de sacoche dans la région avant de la sacoche de cadre de bicyclette de préférence des deux côtés, de manière détachable ou fixée par une articulation rotative.

4. Sacoche pour cadre de bicyclette (1) selon l'une quelconque des revendications précédentes, **caractérisée en ce que** le corps de sacoche (3) et/ou le fond de sacoche (4) présentent une cavité (5, 5') sur une largeur b, au moins sur une région de la périphérie extérieure orientée vers le cadre.

5. Sacoche pour cadre de bicyclette (1) selon la revendication 4, **caractérisée en ce que** la forme concave réalisée sur une région de la périphérie extérieure orientée vers le cadre est adaptée au tube supérieur, au tube de selle ou au tube inférieur.

6. Sacoche pour cadre de bicyclette (1) selon l'une quelconque des revendications précédentes, **caractérisée en ce que** la sacoche présente, pour la fixation au cadre, un ou plusieurs moyens de fixation.

7. Sacoche pour cadre de bicyclette (1) selon l'une quelconque des revendications précédentes, **caractérisée en ce que** le corps de sacoche (3) présente une ou plusieurs ouvertures d'engagement refermables.

8. Sacoche pour cadre de bicyclette (1) selon l'une quelconque des revendications précédentes, **caractérisée en ce que** la périphérie extérieure orientée vers le cadre présente un dispositif de fixation pour un système d'équilibrage.
